# EUROPÄISCHE PATENTSCHRIFT

(11) **EP 0 765 265 B1**
(45) Veröffentlichungstag und Bekanntmachung des Hinweises auf die Patenterteilung: **21.01.1998**
(21) Anmeldenummer: 95919318.6
(22) Anmeldetag: 17.05.1995
(51) Int. Cl.: B62K 25/02, B62H 5/00, F16B 41/00, F16B 23/00

(54) **VERRIEGELUNGSVORRICHTUNG FÜR FAHRRÄDER**
LOCKING DEVICE FOR BICYCLES
DISPOSITIF DE VERROUILLAGE POUR CYCLES

(30) Priorität: 29.06.1994 DE 4423773; 15.07.1994 DE 4426663; 05.10.1994 DE 9416705 U
(43) Veröffentlichungstag der Anmeldung: 02.04.1997
(73) Patentinhaber: Busse, Peter, 10999 Berlin (DE)
(72) Erfinder: Busse, Peter, 10999 Berlin (DE)
(74) Vertreter: Jander, Dieter, Dipl.-Ing.
(86) Internationale Anmeldenummer: DE9500670
(87) Internationale Veröffentlichungsnummer: WO9600678

(56) Entgegenhaltungen:
- EP-A- 0 405 025
- WO-A-93/06375
- GB-A- 2 256 821
- US-A- 3 060 785
- US-A- 3 930 428
- US-A- 4 674 306

## Beschreibung

Die Erfindung bezieht sich auf eine Verziegelungsvorrichtung für Fahrräder, bestehend aus einer Mutter, die auf eine Gewindestange des Fahrrads aufschraubbar ist, einem Schlüsselteil und einer Kappe, deren Boden, wenn die Mutter auf ihrem Gewinde sitzt, sich zwischen Mutter und einem der Mutter gegenüberliegenden Teil des Fahrrades befindet, deren Zylinderwand die Mutter umgibt und im Bereich der Stirnfläche der Mutter endet, und die im angespannten Zustand frei drehbar ist, wobei sich die Oberflächen der Muttern mehrerer Fahrräder voneinander unterscheiden und der die Muttern erfassende Teil des Schlüsselteils eines Fahrrades gewissen Muttern dieses Fahrrades formschlüssig angepaßt ist.

Bei einer bekannten Verriegelungsvorrichtung dieser Art (US-PS 4 674 306) ist das Schlüsselteil starr mit einem Schloß zum Anschließen des Fahrrades z.B. an einen ortsfesten Pfahl verbunden. Die Unterschiede hinsichtlich der Mutternoberflächen beschränken sich auf die Stirnflächen der Mutter. Die Kappe sitzt gleitend, also praktisch ohne Abstand auf der Mutter (mit kreisrunder Umfangsfläche).

Diese Verriegelungsvorrichtung hat mehrere Nachteile: Die Kombination aus Schüssel und Schloß ist insofern nachteilig, als derjenige, der das Schloß aufbricht, dann den Schlüssel zur Verfügung hat und damit die Muter lösen kann. Unter Umständen ist es sogar so, daß für denjenigen, der das Schloß aufbricht, was sich mit einem entsprechenden Werkzeug problemlos durchführen läßt, die Schlüsselsicherung unwichtig ist, da er dann das ganze Fahrrad stehlen kann. Die Tatsache, daß die Unterschiede hinsichtlich der Mutternoberflächen sich auf die Stirnflächen der Muttern beschränken, hat den Nachteil, daß ein Dieb eine Mutter mit Hammer und Meißel lösen kann. Auch kann er die Muttern lösen, indem er mit einer starken Zange die Kappe zusammenpreßt und damit gegen die Mutter preßt und dann mit der Zange Kappe und Mutter dreht.

Der Erfindung liegt die Aufgabe zugrunde, die eingangs erwähnte Verriegelungsvorrichtung derart auszubilden, daß bezüglich des Lösens der Muttern bzw. des Entwendens einzelner Teile des Fahrrades, insbesondere der Räder und/ oder des Sattels, größere Sicherheit als im bekannten Falle besteht.

Diese Aufgabe wird erfindungsgemäß dadurch gelöst, daß das Schlüssel teil als alleiniger Schlüssel ausgebildet ist, daß die Mantelflächen der Muttern unterschiedlich sind und daß die Kappe einen solchen geringen Abstand von der am weitesten radial nach außen ragenden Stelle der Mutter hat, daß der Schlüssel die Mutter umgreifen kann.

Das Schlüsselteil ist also ein reiner Schlüssel, der vom Besitzer des Fahrrades mitgenommen werden kann. Ein Dritter hat somit praktisch keine Möglichkeit, in den Besitz des Schlüssels zu kommen. Hinzu kommt, daß, da die Unregelmäßigkeiten den Umfang der Muttern betreffen, ein Dieb nicht bzw. nicht so leicht wie im bekannten Fall mit Hammer und Meißel eine Mutter lösen kann. Schließlich kann er auch nicht bzw. nicht so leicht wie bisher eine Mutter durch Verformen der Kappe fassen und dann verdrehen: Der Abstand, den die Kappe von der Mutter hat (insbesondere > 1 mm) verhindert das. Durch die erfindungsgemäße Trennung von Schloß und Schlüssel ist auch das Fahrrad insgesamt besser gegen Diebstahl sicherbar als mit dem relativ leicht aufbrechbaren U-förmigen Schloß gemäß der US-PS 4 674 306: Man verwendet anstelle dieses Schlosses ein schwerer aufbrechbares Schloß, z.B. ein Stahlmantel-Schloß.

Die erfindungsgemäße Verriegelungsvorrichtung dient primär dem Befestigen einer Radwelle und/oder einer Sattelstange am Fahrradrahmen und/oder eines Sattels an der Sattel- stange. Darüber hinaus ist sie aber auch z.B. zum Befestigen des Lenkers und/oder des Tretlagers am Rahmen geeignet.

Eine Weiterentwicklung der Erfindung besteht darin, daß die Kappe die Mutter im angespannten Zustand der Verriegelungsvorrichtung geringfügig überragt. Auf diese Weise ist die Mutter besonders gut geschützt.

Ferner wird vorgeschlagen, daß im angespannten Zustand der Verriegelungsvorrichtung die Außenwand der Kappe konisch vom Rahmen des Fahrrades weg verläuft. Dadurch wird erreicht, daß die Kappe nicht oder kaum mit einer Zange erfaßt und zusammengequetscht werden kann (um dann anschließend die Mutter zu verdrehen), weil eine Zange durch die konische Form der Kappe abrutschen würde.

Sodann wird vorgeschlagen, daß der Raum zwischen Mutter und Kappe gegen das Eindringen von schnell härtenden Materialien, insbesondere Kleber, gesichert ist. Das kann erfindungsgemäß dadurch erreicht werden, daß sich zwischen Kappe und Mutter eine Teflonscheibe oder Teflonkappe befindet, auf der Kleber nicht haftet, oder daß die Oberflächen teflonbeschichtet sind.

Eine Weiterentwicklung der Erfindung besteht ferner darin, daß im angespannten Zustand der Verriegelungsvorrichtung die Mutter auf einem Stift der Verriegelungsvorrichtung sitzt, der am anderen Ende einen mit dem Stift ein Stück bildenden Kopf aufweist, wobei der Stift in einer Radnabe des Fahrrades, bestehend aus einem nicht drehbaren Lager und einem drehbaren äußeren Teil, sitzt oder eine Sattel stange am Rahmen des Fahrrades oder den Sattel an der Sattelstange des Fahrrades hält.

Auf diese Weise ist es möglich, Teile von Fahrrädern, wie Räder und Sattel, die mit einem Schnellspannverschluß befestigbar sind, nunmehr mit einer Diebstahlsicherung zu versehen: Man wechselt dazu den Stift mit Schnellspannverschluß gegen einen Stift mit Kopf aus (die Möglichkeit des Schnellanspannens besteht dann allerdings nicht mehr).

Schließlich wird vorgeschlagen, daß die Stirnflächen der Muttern von Kanten umgrenzt sind, für die die Tangenten in jedem ihrer Punkte mit den Radien in diesen Punkten einen Winkel größer als 45°, insbesondere größer als 50° bilden. Dann kann man nicht mit Hammer und Meißel die Mutter lösen.

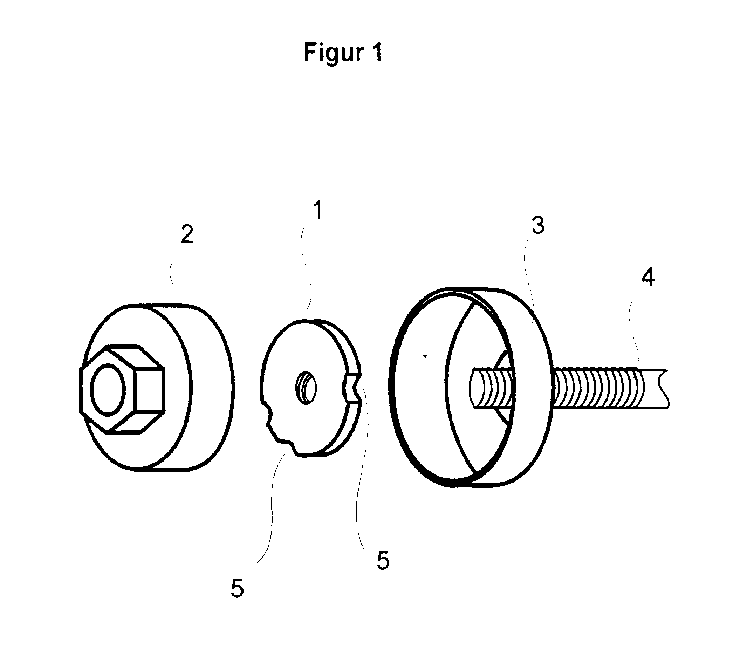

Weitere Einzelheiten der Erfindung ergeben sich aus der Zeichnung. Darin zeigen die Figuren 1 bis 4 Ausführungsbeispiele der Erfindung.

In Fig. 1 ist mit 1 eine Mutter, mit 2 ein Schlüssel zur Betätigung der Mutter 1, mit 3 eine Kappe und mit 4 ein Gewinde bezeichnet. Die Mutter 1 weist randseitige Einschnitte 5 auf, in die Stege oder Ausbuchtungen im Innern des Schlüssels 2 greifen können. Der Schlüssel 2 besteht aus einer Hülse und einer Sechskantmutter ohne Innengewinde, die mit einem üblichen weiteren Schlüssel betätigt werden kann. Die Kappe 3 umgibt im fest angespannten Zustand die Mutter 1 vollständig und überragt sie außerdem. Die Kappe 3 ist frei drehbar.

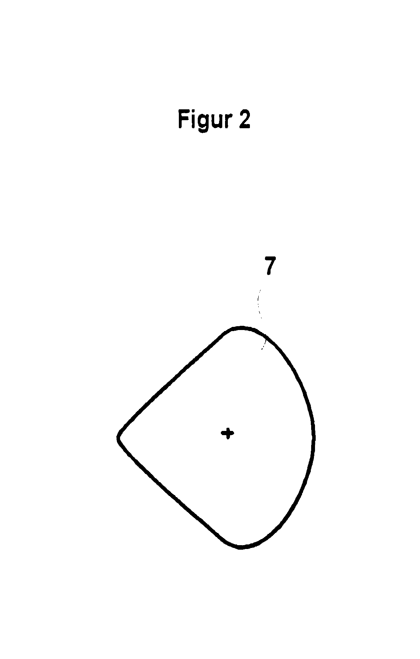

Fig. 2 zeigt eine weitere Ausführungsform und zwar eine Mutter 7 in Draufsicht. Diese zeichnet sich durch eine etwa dreieckige Umfangsform aus. Der ihr zugeordnete Schlüssel (nicht dargestellt) besitzt eine Ausnehmung, die bei Draufsetzen des Schlüssels auf die Mutter 7 letztere dicht umfaßt.

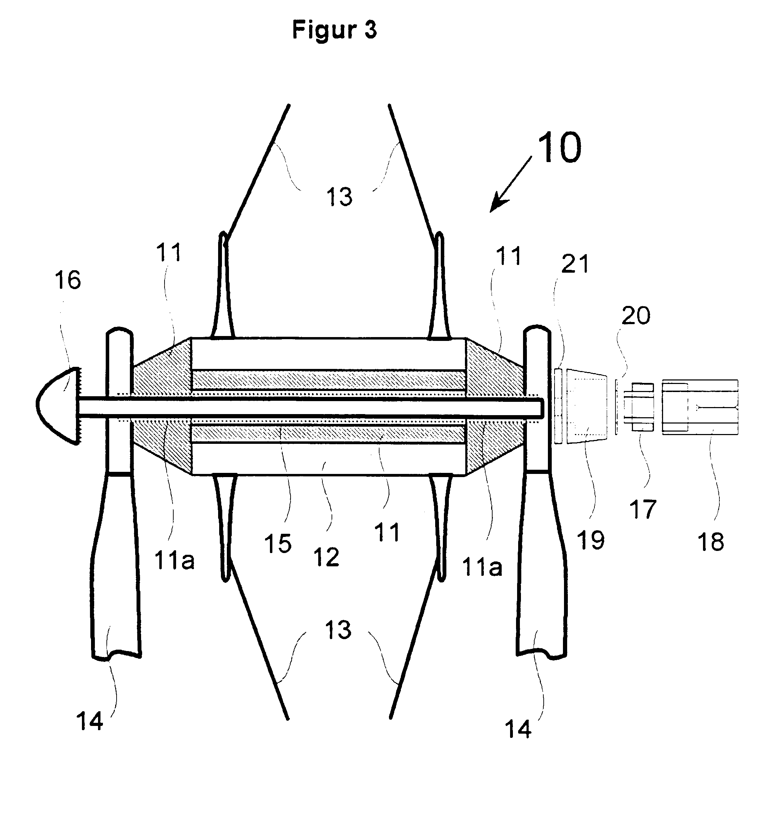

Die Fig. 3 zeigt eine Ausführungsform, die eine Verriegelung mit Schnellspannverschluß ersetzt. Mit 10 ist eine Vorderradnabe, bestehend aus einem nicht drehbaren Lager 11 mit eingepaßtem Rohr 11a und einem drehbaren äußeren Teil 12 bezeichnet. An dem äußeren Teil 12 sitzen Speichen 13. Mit 14 ist eine Radgabel bezeichnet. Ein Stift 15 weist links einen Kopf 16 auf, der auf seiner der Gabel 14 zugewandten Seite eine Rändelung aufweist. Auf der rechten Seite ist auf den Stift 15 eine Mutter 17 mittels eines Schlüssels 18 aufschraubbar. Die Rändelung am Kopf 16 verhindert das Mitdrehen des Stiftes 15 beim Anziehen der Mutter 17. Die Mutter 17 besitzt die erfindungsgemäßen Unregelmäßigkeiten auf ihrer Mantelfläche. Der Schlüssel 18 ist auf seiner der Mutter 17 zugewandten Seite entsprechend geformt. Sein rechtes Ende weist einen Sechskant auf. Man kann den Schlüssel 18 somit mit einem normalen Mutternschlüssel betätigen. Im zusammengeschraubten Zustand umgibt eine Kappe 19 die Mutter 17. Zwischen Mutter 17 und Kappe 19 befindet sich eine Teflonscheibe 20. Zwischen Kappe 19 und Radgabel 14 befindet sich eine Andruckscheibe 21. Der Kopf 16 ist rund, so daß er keine Angriffsmöglichkeit für eine Zange bietet. Er kann natürlich auch konisch (z.B. zweifach konisch derart, daß sich nach außen an eine gewisse Konizität eine größere Konizität anschließt) sein.

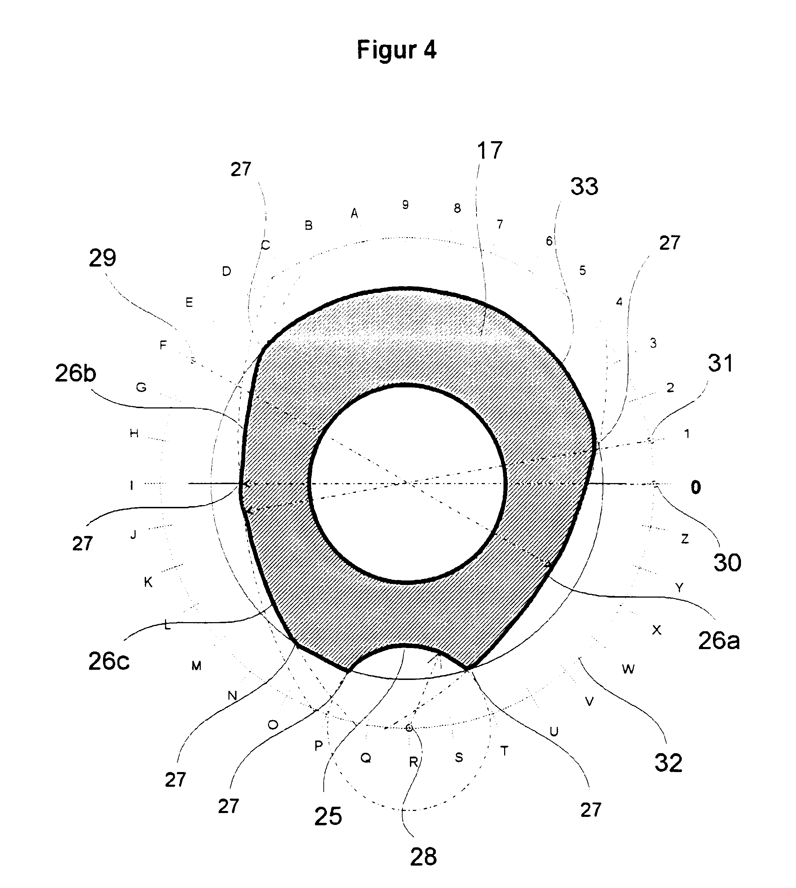

Figur 4 zeigt die Stirnseite einer Mutter 17 in vergrößertem Maßstab. Ihr Umfang wird durch eine kleine Einkerbung 25 und drei Abschnitte 26 a, b und c gebildet. Diese erstrecken sich jeweils zwischen den Punkten 27. Ihre Formen sind kreisförmig. Die Einkerbung 25 hat den Mittelpunkt 28. Der Abschnitt 26 a hat den Mittelpunkt 29, der Abschnitt 26 b hat den Mittelpunkt 30 und der Abschnitt 26 c den Mittelpunkt 31. Die Mittelpunkte 28 bis 31 liegen auf einem Hilfskreis 32. Der obere Teil des Umfangs der Mutter 17 wird von einem Abschnitt 33 gebildet, der seinen Mittelpunkt im Mittelpunkt der Mutter 17 hat. Die Übergänge zwischen den einzelnen Abschnitten bzw. der Einkerbung 25 und den angrenzenden Abschnitten sind ebenfalls kreisförmig.

Die Muttern einer Serie unterscheiden sich dadurch voneinander, daß die Mittelpunkte 29, 30, 31 ganz oder teilweise an jeweils anderen Stellen liegen. Der Kreis 32 weist 36 Punkte auf, die in gleichen Abständen voneinander liegen. Jeder Punkt kann Mittelpunkt sein. Dann ist die Zahl der Muttern, die nach diesem Gesetz mit der Maßgabe herstellbar sind, daß eine Form nur ein einziges Mal auftritt, ca. 650. Man kann also auf diese Weise eine außerordentlich große Zahl von sich voneinander unterscheidenden Muttern schaffen. Außerdem sind die Formen, und zwar die der Muttern und die der Schlüssel, relativ einfach im Wege des Fräsens herstellbar. Versieht man die Punkte auf dem Hilfskreis 32 mit Ziffern 0, 1, ... 9, und dann mit Buchstaben A, B, ... Z (s. Fig. 4), dann würden die Mittelpunkte der bewußten Kreise auf den Punkten 0, 1, F und R liegen. Bei einer Codifizierung der verschiedenen Muttern hätte dann die in Fig. 4 dargestellte Mutter den Code: 01FR.

In der erfindungsgemäßen Art und Weise können auch die Muttern auf den Radwellen von Dreirädern oder Motorrädern gesichert werden.

## Patentansprüche

1. Verriegelungsvorrichtung für Fahrräder, bestehend aus einer Mutter, die auf eine Gewindestange des Fahrrads aufschraubbar ist, einem Schlüsselteil und einer Kappe, deren Boden, wenn die Mutter auf ihrem Gewinde sitzt, sich zwischen Mutter und einem der Mutter gegenüberliegenden Teil des Fahrrades befindet, deren Zylinderwand die Mutter umgibt und im Bereich der Stirnfläche der Mutter endet, und die im angespannten Zustand frei drehbar ist, wobei sich die Oberflächen der Muttern mehrerer Fahrräder voneinander unterscheiden und der die Muttern erfassende Teil des Schlüsselteils eines Fahrrades gewissen Muttern dieses Fahrrades formschlüssig angepaßt ist, **dadurch gekennzeichnet,** daß das Schlüsselteil als alleiniger Schlüssel (2;18) ausgebildet ist, daß die Mantelflächen der Muttern (1;7;17) unterschiedlich sind und daß die Kappe (3;19) einen solchen geringen Abstand von der am weitesten radial nach außen ragenden Stelle der Mutter (1;7;17) hat, daß der Schlüssel (2;18) die Mutter (1;7;17) umgreifen kann.

2. Verriegelungsvorrichtung nach Anspruch 1, **dadurch gekennzeichnet,** daß der Außenumfang der Mutter (1;7;17) eine nicht regelmäßige Form hat.

3. Verriegelungsvorrichtung nach Anspruch 1 oder 2, **dadurch gekennzeichnet,** daß die Muttern (1;7;17) eines Rades mit ein und demselben Schlüssel (2;18) betätigt werden können.

4. Verriegelungsvorrichtung nach einem oder mehreren der Ansprüche 1 bis 3, **dadurch gekennzeichnet,** daß die Kappe (3;19) die Mutter (1;7;17) im angespannten Zustand der Verriegelungsvorrichtung geringfügig überragt.

5. Verriegelungsvorrichtung nach einem oder mehreren der Ansprüche 1 bis 4, **dadurch gekennzeichnet,** daß der Schlüssel (2;18) aus einer Scheibe oder Hülse und einer Mutter mit Bohrung, aber ohne Innengewinde, insbesondere Sechskantmutter, auf der dem Fahrradrahmen abgewandten Seite der Scheibe oder Hülse besteht, wobei die Mutter ohne Innengewinde mit einem üblichen weiteren Schlüssel betätigt werden kann.

6. Verriegelungsvorrichtung nach einem oder mehreren der Ansprüche 1 bis 5, **dadurch gekennzeichnet,** daß im angespannten Zustand der Verriegelungsvorrichtung die Außenwand der Kappe (19) konisch vom Rahmen des Fahrrades weg verläuft.

7. Verriegelungsvorrichtung nach einem oder mehreren der Ansprüche 1 bis 6, **dadurch gekennzeichnet,** daß der Raum zwischen Mutter (17) und Kappe (19) gegen das Eindringen von schnell härtenden Materialien, insbesondere Klebern, gesichert ist.

8. Verriegelungsvorrichtung nach Anspruch 7, **dadurch gekennzeichnet**, daß sich zwischen Kappe (19) und Mutter (17) eine Teflonscheibe (20) oder Teflonkappe befindet, auf der Kleber nicht haftet.

9. Verriegelungsvorrichtung nach Anspruch 7, **dadurch gekennzeichnet**, daß die Oberflächen teflonbeschichtet sind.

10. Verriegelungsvorrichtung nach Anspruch 1, **dadurch gekennzeichnet**, daß im angespannten Zustand der Verriegelungsvorrichtung die Mutter auf einem Stift (15) der Verriegelungsvorrichtung sitzt, der am anderen Ende einen mit dem Stift (15) ein Stück bildenden Kopf (16) aufweist, wobei der Stift (15) in einer Radnabe des Fahrrades, bestehend aus einem nicht drehbaren Lager (11) und einem drehbaren äußeren Teil (12), sitzt oder eine Sattelstange am Rahmen des Fahrrades oder den Sattel an der Sattelstange des Fahrrades hält.

11. Verriegelungsvorrichtung nach Anspruch 10, **dadurch gekennzeichnet**, daß der Kopf (16) auf der dem Rahmen zugewandten Seite eine Rändelung aufweist.

12. Verriegelungsvorrichtung nach einem oder mehreren der Ansprüche 1 bis 11, **dadurch gekennzeichnet**, daß sich zwischen der die Mutter (17) umgebenden Kappe (19) und dem rahmenfesten Teil des Fahrrades, insbesondere der Radgabel (14), eine Andruckscheibe (21) befindet, die die Andruckkraft der Mutter (17) auf den Rahmen des Fahrrades, insbesondere die Radgabel (14), überträgt.

13. Verriegelungsvorrichtung nach einem oder mehreren der Ansprüche 1 bis 12, **dadurch gekennzeichnet,** daß die Querschnittfiguren der Muttern (17) mehrerer Fahrräder eine kleine Einbuchtung (25) vorzugsweise kreisförmiger Art und drei Abschnitte (26 a,b,c) von Kreisen aufweisen, deren Mittelpunkte (28,29,30,31) auf einem Hilfskreis (32) liegen, dessen Durchmesser größer als, vorzugsweise 1,5 mal so groß wie der größte Durchmesser der Mutter (17) ist.

14. Verriegelungsvorrichtung nach Anspruch 13, **dadurch gekennzeichnet**, daß der Hilfskreis (32) in kurzen, vorzugsweise gleichen Abständen Punkte, z.B. 36 Punkte, aufweist und daß für eine Mutter (17) die Mittelpunkte (28-31) auf diesen Punkten liegen, wobei sich die Lage der Mittelpunkte einer Mutter von den Lagen der Mittelpunkte aller anderen Muttern einer Serie unterscheidet.

15. Verriegelungsvorrichtung nach einem oder mehreren der Ansprüche 1 bis 14, **dadurch gekennzeichnet,** daß die Stirnflächen der Muttern (1) von Kanten umgrenzt sind, für die die Tangenten in jedem ihrer Punkte mit den Radien in diesen Punkten einen Winkel größer als 45°, insbesondere größer als 50° bilden.

## Claims

1. Locking device for bicycles, comprising a nut which can be screwed onto a threaded rod of the bicycle, a key part and a cap, the base of which, when the nut is located on its thread, is situated between the nut and a part of the bicycle which is opposite the nut, and the cylindrical wall of which cap surrounds the nut and ends in the region of the end face of the nut, and which cap, in the tightened state, is freely rotatable, the surfaces of the nuts of a plurality of bicycles differing from one another and that part of the key part of a bicycle which engages the nuts being adapted in a positively locking manner to certain nuts of this bicycle, characterized in that the key part is designed as a separate key (2; 18), in that the peripheral surfaces of the nut (1; 7; 17) are different, and in that the cap (3; 19) is at such a short distance from that part of the nut (1; 7; 17) which projects furthest radially outwards that the key (2; 18) can engage around the nut (1; 7; 17).

2. Locking device according to Claim 1, characterized in that the outer periphery of the nut (1; 7; 17) has an irregular form.

3. Locking device according to Claim 1 or 2, characterized in that the nuts (1; 7; 17) of a bicycle can be actuated using one and the same key (2; 18).

4. Locking device according to one or more of Claims 1 to 3, characterized in that the cap (3; 19) projects slightly beyond the nut (1; 7; 17) in the tightened state of the locking device.

5. Locking device according to one or more of Claims 1 to 4, characterized in that the key (2; 18) comprises a disc or sleeve and a nut having a bore, but no internal thread, in particular a hexagon nut, on the side of the disc or sleeve which is remote from the frame of the bicycle, it being possible to actuate the nut without an internal thread by means of a conventional further key.

6. Locking device according to one or more of Claims 1 to 5, characterized in that, in the tightened state of the locking device, the outer wall of the cap (19) runs conically away from the frame of the bicycle.

7. Locking device according to one or more of Claims 1 to 6, characterized in that the space between nut (17) and cap (19) is protected against the penetration of quick-setting materials, in particular adhesives.

8. Locking device according to Claim 7, characterized in that a Teflon disc (20) or Teflon cap, to which adhesive does not stick, is situated between cap (19) and nut (17).

9. Locking device according to Claim 7, characterized in that the surfaces are Teflon-coated.

10. Locking device according to Claim 1, characterized in that, in the tightened state of the locking device, the nut is located on a pin (15) of the locking device, which pin, at the other end, has a head (16) which is integral with the pin (15), the pin (15) being located in a wheel hub of the bicycle, comprising a non-rotatable bearing (11) and a rotatable outer part (12), or retaining a seatpost on the frame of the bicycle or the saddle on the seatpost of the bicycle.

11. Locking device according to Claim 10, characterized in that the head (16) has a knurling on the side facing the frame.

12. Locking device according to one or more of Claims 1 to 11, characterized in that a contact disc (21), which transmits the contact force of the nut (17) onto the frame of the bicycle, in particular the bicycle forks (14), is situated between the cap (19) surrounding the nut (17) and the part of the bicycle which is fixed to the frame, in particular the wheel forks (14).

13. Locking device according to one or more of Claims 1 to 12, characterized in that the cross-sectional shapes of the nuts (17) of a plurality of bicycles have a small indentation (25), preferably circular, and three segments (26a,b,c) of circles, the centres (28,29,30,31) of which lie on a secondary circle (32), the diameter of which is larger than, preferably 1.5 times as large as, the largest diameter of the nut (17).

14. Locking device according to Claim 13, characterized in that the secondary circle (32) has points, for example 36 points, at short, preferably identical intervals, and in that the centres (28-31) for a nut (17) lie on these points, the position of the centres of a nut differing from the positions of the centres of all the other nuts in a series.

15. Locking device according to one or more of Claims 1 to 14, characterized in that the end faces of the nuts (1) are delimited by edges for which the tangents at each of their points form an angle of greater than 45°, in particular greater than 50°, with the radii at these points.

## Revendications

1. Dispositif de verrouillage pour cycles, composé d'un écrou pouvant être vissé sur une tige filetée de la bicyclette, d'un élément clé, et d'un chapeau dont le fond se situe entre l'écrou et une partie de la bicyclette, qui est opposée à l'écrou, lorsque l'écrou est monté sur son filetage, et dont la paroi cylindrique entoure l'écrou et se termine à hauteur de la face frontale de l'écrou, et qui, à l'état serré, est libre de tourner, les surfaces des écrous de plusieurs bicyclettes étant différentes les unes des autres, et la partie de l'élément clé d'une bicyclette, qui saisit l'écrou, étant adaptée par conjugaison des formes à certains écrous de cette bicyclette, caractérisé en ce que l'élément clé est réalisé en tant que clé unique (2; 18), en ce que les surfaces enveloppantes des écrous (1; 7; 17) sont différentes, et en ce que le chapeau (3; 19) présente une faible distance par rapport au point de l'écrou (1; 7; 17) saillant radialement le plus loin vers l'extérieur, de manière telle que la clé (2; 18) puisse s'emboîter par-dessus l'écrou (1; 7; 17).

2. Dispositif de verrouillage selon la revendication 1, caractérisé en ce que le diamètre extérieur de l'écrou (1; 7; 17) présente une forme irrégulière.

3. Dispositif de verrouillage selon la revendication 1 ou 2, caractérisé en ce que les écrous (1; 7; 17) d'une bicyclette peuvent être actionnés avec une et la même clé (2; 18).

4. Dispositif de verrouillage selon l'une ou plusieurs des revendications 1 à 3, caractérisé en ce que le chapeau (3; 19) dépasse légèrement l'écrou (1; 7; 17) à l'état serré du dispositif de verrouillage.

5. Dispositif de verrouillage selon l'une ou plusieurs des revendications 1 à 4, caractérisé en ce que la clé (2; 18) est constituée d'une rondelle ou d'un manchon ainsi que d'un écrou pourvu d'un alésage, mais non taraudé, en particulier d'un écrou six pans, aménagé du côté de la rondelle ou du manchon, qui est tourné vers l'opposé du cadre de la bicyclette, l'écrou non taraudé pouvant être actionné au moyen d'une autre clé supplémentaire traditionnelle.

6. Dispositif de verrouillage selon l'une ou plusieurs des revendications 1 à 5, caractérisé en ce qu'à l'état serré du dispositif de verrouillage, la paroi extérieure du chapeau (19) s'étend selon une forme conique en s'éloignant du cadre de la bicyclette.

7. Dispositif de verrouillage selon l'une ou plusieurs des revendications 1 à 6, caractérisé en ce que l'espace compris entre l'écrou (17) et le chapeau (19) est protégé contre la pénétration de matières à prise rapide, notamment des colles.

8. Dispositif selon la revendication 7, caractérisé en ce qu'une rondelle en Téflon (20) ou un capuchon en Téflon, sur laquelle/ lequel la colle n'adhère pas, se trouve entre le chapeau (19) et l'écrou (17).

9. Dispositif de verrouillage selon la revendication 7, caractérisé en ce que les surfaces sont revêtues de Téflon.

10. Dispositif de verrouillage selon la revendication 1, caractérisé en ce qu'à l'état serré du dispositif de verrouillage, l'écrou se loge sur une broche (15) du dispositif de verrouillage, qui porte, à l'autre extrémité, une tête (16) réalisée d'un seul tenant avec la broche (15), la broche (15) étant logée dans un moyeu de roue de la bicyclette, composé d'un palier non rotatif (11) et d'une partie tournante extérieure (12), ou retenant une tige de selle sur le cadre de la bicyclette, ou encore retenant la selle sur la tige de selle de la bicyclette.

11. Dispositif de verrouillage selon la revendication 10, caractérisé en ce que la tête (16) comporte, du côté tourné face au cadre, une dentelure.

12. Dispositif de verrouillage selon l'une ou plusieurs des revendications 1 à 11, caractérisé en ce qu'entre le chapeau (19) entourant l'écrou (17) et la partie solidaire du cadre de la bicyclette, et notamment la fourche porte-roue (14), une rondelle de serrage (21) est prévue, qui transmet la force de serrage de l'écrou (17) au cadre de la bicyclette, notamment à la fourche porte-roue (14).

13. Dispositif de verrouillage selon l'une ou plusieurs des revendications 1 à 12, caractérisé en ce que les formes de coupe transversale des écrous (17) de plusieurs bicyclettes comportent un petit évidement (25), de préférence du type circulaire, ainsi que trois segments (26 a, b, c) de cercles, dont les centres (28, 29, 30, 31) se situent sur un cercle auxiliaire (32) dont le diamètre est plus grand, de préférence 1,5 fois plus grand, que le diamètre le plus grand de l'écrou (17).

14. Dispositif de verrouillage selon la revendication 13, caractérisé en ce que le cercle auxiliaire (32) comporte, à des intervalles courts, de préférence équidistants, des points, par exemple 36 points, et que, pour un écrou (17), les centres se situent sur ces points, la position des centres, pour un écrou donné, étant différente des positions des centres de tous les autres écrous d'une série.

15. Dispositif de verrouillage selon l'une ou plusieurs des revendications 1 à 14, caractérisé en ce que les faces frontales des écrous (1) sont délimitées par des bords, pour lesquels les tangentes sur chacun de leurs points forment, avec les rayons, un angle supérieur à 45°, en particulier un angle supérieur à 50° dans ces points.
